# EUROPÄISCHE PATENTSCHRIFT

(11) **EP 3 941 099 B1**
(45) Veröffentlichungstag und Bekanntmachung des Hinweises auf die Patenterteilung: **28.01.2026**
(21) Anmeldenummer: 20186545.8
(22) Anmeldetag: 17.07.2020
(51) Int. Cl.: H04W 12/033, H04W 12/04, H04W 84/02, H04L 9/40

(54) **ÜBERTRAGUNG VON VERSCHLÜSSELTEN NACHRICHTEN IN EINEM FUNKSYSTEM**
TRANSMISSION OF ENCRYPTED MESSAGES IN A RADIO SYSTEM
TRANSMISSION DE MESSAGES CRYPTÉS DANS UN SYSTÈME RADIO

(43) Veröffentlichungstag der Anmeldung: 19.01.2022
(73) Patentinhaber: Swissphone Wireless AG, 8833 Samstagern (CH)
(72) Erfinder: SALADIN, Luka, 8820 Wädenswil (CH)
(74) Vertreter: E. Blum & Co. AG

(56) Entgegenhaltungen:
- US-A1- 2009 036 164
- US-A1- 2019 237 170
- US-B1- 7 409 428

## Beschreibung

### Gebiet der Erfindung

Die Erfindung betrifft ein Verfahren zur Übertragung von verschlüsselten Nachrichten in einer Funkrufanordnung.

Weitere Aspekte der Erfindung betreffen eine korrespondierende Funkrufanordnung für ein derartiges Verfahren, einen Funkmeldeempfänger und ein Anwendungsprogramm für ein elektronisches Gerät, insbesondere ein Mobilfunkgerät, z.B. ein Smartphone.

### Hintergrund

Funkrufanordnungen bzw. Funkrufnetze (Paging-Networks) sind bekannt. Sie dienen hauptsächlich zur Übermittlung von Alarm- bzw. Einsatzmitteilungen an Personen von Einsatzkräften, wie zum Beispiel Feuerwehren. Diese Personen tragen einen digitalen Meldeempfänger DME (Pager) auf sich, an welchen die Mitteilungen per Funk ausgesendet und auf dem Pager angezeigt werden. Bekannte Funkrufanordnungen können nach einem Funkrufprotokoll, z.B. dem POCSAG-Standard oder dem FLEX-Protokoll arbeiten. Die Datenrate der Übermittlungen ist standardgemäss beschränkt.

In einigen Ländern, z.B. Deutschland, ist mittlerweile die Verschlüsselung von Nachrichten, welche über POCSAG (und im Fall von Hybridfähigen POCSAG/GSM Endgeräten auch über GSM) geschickt werden, üblich. Die dabei verwendeten Schlüssel sind Teil eines Verschlüsselungskonzepts, welche von der jeweiligen Einsatzorganisation, die die jeweilige Funkrufanordnung betreibt, vollumfänglich kontrolliert wird. Dies trifft auch auf die Endgeräte (Pager) sowie die Alarmierungsinfrastruktur zu, welche in der Regel komplett ohne externe IT-Infrastruktur, z.B. Cloud-Computing, ausführbar sind.

Es sind auch Anwendungsprogramme (Apps) im Feuerwehrbereich mit erweiterten Funktionen und Komfort bekannt. Diese basieren aber meist auf einer «Bring your own device» Policy, d.h. die Feuerwehrleute nutzen dafür Ihre privaten Smartphones. Ausserdem sind diese Anwendungsprogramme nicht in das Verschlüsselungskonzept der Einsatzorganisation eingebunden, sondern in die Verschlüsselung der Push-Dienste der jeweiligen Betriebssysteme der Mobilfunkgeräte, z.B. die Push-Dienste von iOS oder Android.

Will die Einsatzorganisation zusätzlich ihr eigenes Verschlüsselungskonzept auch auf dem Anwendungsprogramm anwenden, stösst dies auf folgende Problemstellungen bezüglich der Zuteilung und Speicherung von Schlüsseln:
Erstens müssen die Nutzer des Anwendungsprogramms authentifiziert werden.

Und zweitens müssen die Schlüssel und Adressen der Einsatzkräfte sowohl in den Pagern/POCSAG Endgeräten als auch auf den Apps/Smartphones doppelt hinterlegt werden.

Dies führt sowohl zu einer erhöhten Komplexität als auch zu einer erhöhten Fehleranfälligkeit.

Die US 2019/0237170 A1 beschreibt eine multimodale verschlüsselte Messaging-Plattform zur Bereitstellung von HIPAA-konformem Messaging und Schnittstellen für den Zugriff auf elektronische Datensätze.

Die US 2009/0036164 A1 beschreibt eine Smartcard, auf die über ein Personal Area Network zugegriffen werden kann. Eine Ausführungsform umfasst einen drahtlosen Transceiver zum kommunikativen Koppeln mit einem Personal Area Network (PAN), um eine Authentifizierungsanforderung über das PAN von einem Gerät zu empfangen. Die Vorrichtung umfasst ferner eine Speichervorrichtung zum Speichern eines digitalen Zertifikats, das einen Benutzer eindeutig identifiziert. Ein Authentifizierungsmodul in der Vorrichtung kann den Benutzer in Reaktion auf eine Authentifizierungsanforderung von der Vorrichtung unter Verwendung des digitalen Zertifikats authentifizieren, wobei dem Benutzer nach der Authentifizierung erlaubt wird, auf den Computer zuzugreifen.

### Darstellung der Erfindung

Der Erfindung liegt daher die Aufgabe zu Grunde, ein Verfahren zur Übertragung von verschlüsselten Nachrichten in einer Funkrufanordnung zu schaffen, welches es erlaubt, verschlüsselte Nachrichten in effizienter und/oder einfacher Weise auch auf Geräten anzuzeigen, die nicht in das Verschlüsselungskonzept der Funkrufanordnung bzw. der Einsatzorganisation, die die Funkrufanordnung betreibt, eingebunden sind.

Diese Aufgabe wird in einem ersten Aspekt der Erfindung von einem Verfahren gemäss Anspruch 1 gelöst.

Der erste Aspekt der Erfindung betrifft insbesondere ein Verfahren zur Übertragung von verschlüsselten Nachrichten in einer Funkrufanordnung. Die Funkrufanordnung umfasst eine Funkrufzentrale und eine Mehrzahl von Funkmeldeempfängern. Die Funkmeldeempfänger speichern einen oder mehrere elektronische Schlüssel eines ersten Verschlüsselungsmechanismus und einen oder mehrere Empfangsadressen der Funkrufanordnung. Die einen oder die mehreren elektronischen Schlüssel des ersten Verschlüsselungsmechanismus sind von einer Einsatzorganisation als privates Verschlüsselungssystem organisiert.

Die Funkmeldeempfänger sind zum Empfang von mittels des ersten Verschlüsselungsmechanismus verschlüsselten Nachrichten von der Funkrufzentrale über eine erste Datenverbindung vorgesehen.

Das erfindungsgemässe Verfahren ist insbesondere durch folgende Schritte gekennzeichnet:
Senden der verschlüsselten Nachrichten von der Funkrufzentrale über eine zweite Datenverbindung an ein Anwendungsprogramm eines elektronischen Gerätes, insbesondere eines Mobilfunkgerätes;
Weiterleiten der verschlüsselten Nachrichten von dem elektronischen Gerät an den Funkmeldeempfänger über eine dritte Datenverbindung;
Entschlüsseln der von dem elektronischen Gerät weitergeleiteten verschlüsselten Nachricht durch den Funkmeldeempfänger mittels eines der in dem Funkmeldeempfänger gespeicherten elektronischen Schlüssel;
Senden der entschlüsselten Nachricht über die dritte Datenverbindung von dem Funkmeldeempfänger an das elektronische Gerät; und
Anzeigen der entschlüsselten Nachricht von dem Anwendungsprogramm auf dem elektronischen Gerät.

Ein derartiges Verfahren hat den Vorteil, dass die elektronischen Schlüssel und die Empfangsadressen, an welche die verschlüsselte Nachricht gesendet werden soll, nur in dem Funkmeldeempfänger gespeichert werden, während sie in dem Anwendungsprogramm nicht gespeichert werden müssen. Aus der Sicht des Anwendungsprogramms fungiert der Funkmeldeempfänger somit als Schlüssel für die über die zweite Datenverbindung empfangenen verschlüsselten Nachrichten.

Dies erleichtert die Verwaltung der elektronischen Schlüssel und erhöht die Sicherheit der Funkrufanordnung. Dies ist insbesondere ein Vorteil, wenn das elektronische Gerät, welches insbesondere ein privates Endgerät, z.B. ein privates Smartphone ist, oft gewechselt wird.

Das erfindungsgemässe Verfahren ist bei Funksystemen vorteilhaft, bei denen die elektronischen Schlüssel des ersten Verschlüsselungsmechanismus von einer Einsatzorganisation als privates Verschlüsselungssystem bzw. als privates Verschlüsselungskonzept organisiert werden. Hier wird es durch das erfindungsgemässe Verfahren ermöglicht, die innerhalb des Verschlüsselungskonzeptes der Einsatzorganisation gesendeten Nachrichten unverschlüsselt auf den privaten Smartphones der Einsatzkräfte anzuzeigen, ohne dass das Smartphone den Schlüssel kennt.

Der Funkmeldeempfänger kann gemäss Ausgestaltungen der Erfindung ein von der Einsatzorganisation ausgegebenes, kontrolliertes und dediziertes Gerät sein, beispielsweise ein Pager. Dementsprechend kann die Funkrufanordnung verschlüsselte Nachrichten, z.B. Alarmmitteilungen, an die Einsatzkräfte der Organisation übermitteln.

Gemäss einer Ausgestaltung der Erfindung weist das Verfahren ferner die nachfolgenden Schritte auf:
Herstellen der dritten Datenverbindung und Senden einer Anfrage für die eine oder die mehreren Empfangsadressen des Funkmeldeempfängers und einen Identifikationstoken von dem elektronischen Gerät an den Funkmeldeempfänger;
Senden der einen oder der mehreren Empfangsadressen und des Identifikationstokens von dem Funkmeldeempfänger an das Anwendungsprogramm des elektronischen Geräts über die dritte Datenverbindung; und
Senden der einen oder der mehreren Empfangsadressen und des Identifikationstokens von dem Anwendungsprogramm des elektronischen Gerätes an die Funkrufzentrale.

Der Identifikationstoken ist dabei ein Token, der mit einer Identität des korrespondierenden Funkmeldeempfängers gekoppelt ist. Der Identifikationstoken kann insbesondere die Seriennummer des Funkmeldeempfängers sein.

Daraufhin können der Funkmeldeempfänger und das Anwendungsprogramm in einem weiteren Schritt bei der Funkrufzentrale registriert werden, zusammen mit einer oder mehreren Empfangsadressen und dem Identifikationstoken des zugehörigen Funkmeldeempfängers.

Die Funkrufzentrale kann somit die Nachrichten, die für den dazu korrespondierenden Funkmeldeempfänger bestimmt sind, zukünftig parallel an das so registrierte Anwendungsprogramm über die zweite Datenverbindung senden.

Eine derartige Ausführungsform der Erfindung hat den Vorteil, dass das Anwendungsprogramm von der Funkrufzentrale nicht separat authentifiziert werden muss. Vielmehr erfolgt die Authentifizierung des Anwendungsprogramms gegenüber der Funkrufzentrale mit Hilfe der Identität des Funkmeldeempfängers bzw. des Identifikationstokens des Funkmeldeempfängers.

Gemäss einer weiteren Ausgestaltung der Erfindung verschlüsselt die Funkrufzentrale die mittels des ersten Verschlüsselungsmechanismus verschlüsselte Nachricht zusätzlich mittels eines zweiten Verschlüsselungsmechanismus. Ausserdem sendet die Funkrufzentrale die mit dem ersten und dem zweiten Verschlüsselungsmechanismus verschlüsselte Nachricht über die zweite Datenverbindung an das Anwendungsprogramm des elektronischen Gerätes. Ferner entschlüsselt das Anwendungsprogram den zweiten Verschlüsselungsmechanismus der Nachricht und leitet nur die mit dem ersten Verschlüsselungsmechanismus verschlüsselte Nachricht an den Funkmeldeempfänger über die dritte Datenverbindung weiter.

Gemäss einer derartigen Ausgestaltung der Erfindung sind die Nachrichten, die über die zweite Datenverbindung an das Anwendungsprogramm geschickt werden, somit doppelt verschlüsselt, und zwar einerseits mit dem ersten Verschlüsselungsmechanismus, z.B. im Rahmen eines privaten Verschlüsselungskonzeptes der jeweiligen Einsatzorganisation, und andererseits mit einem zweiten Verschlüsselungsmechanismus. Dabei kann der zweite Verschlüsselungsmechanismus gemäss Ausführungsformen der Erfindung insbesondere ein Verschlüsselungsmechanismus eines Dienstes der zweiten Datenverbindung sein. Gemäss einer bevorzugten Ausgestaltung der Erfindung ist der zweite Verschlüsselungsmechanismus eine Ende-zu-Ende Verschlüsselung zwischen der Funkrufzentrale und dem Anwendungsprogram sein.

Gemäss einer Ausführungsform des Verfahrens ist die zweite Datenverbindung eine Datenverbindung über das Internet, insbesondere ein Push-Dienst des Betriebssystems des elektronischen Gerätes, z.B. ein Push-Dienst der Betriebssysteme iOS oder Android. Derartige Push-Dienste haben oft eine eigene Verschlüsselung, welche gemäss Ausführungsformen der Erfindung als zweiter Verschlüsselungsmechanismus benutzt werden kann.

Gemäss einer Ausführungsform des Verfahrens ist der erste Verschlüsselungsmechanismus ein symmetrisches Verschlüsselungsverfahren, z.B. basierend auf dem International Data Encryption Algorithmus (IDEA), AES-128 oder AES-256.

Gemäss einer Ausführungsform des Verfahrens ist die erste Datenverbindung eine drahtlose Datenverbindung gemäss einem Funkrufprotokoll, z.B. dem POCSAG-Standard oder dem FLEX-Protokoll, oder einem Mobilfunkstandard, z.B. ein Mobilfunkstandard der zweiten (2G), dritten (3G), vierten (4G) oder fünften (5G) Generation, oder eine low-power wide-area network (LPWAN) Datenverbindung, z.B. gemäss LoRa, LoRaWAN oder MIOTY.

Gemäss einer Ausführungsform des Verfahrens ist die dritte Datenverbindung eine drahtlose lokale Datenverbindung, insbesondere eine Datenverbindung gemäss einem Bluetooth-Standard, z.B. gemäss dem Bluetooth Low Energy (BLE)-Standard. Gemäss alternativen Ausführungsformen ist es aber auch möglich, die dritte Datenverbindung als drahtgebundene Datenverbindung auszuführen, z.B. über eine USB-Verbindung.

Gemäss Ausführungsformen kann die dritte Datenverbindung einen weiteren (dritten) Verschlüsselungsmechanismus umfassen, z.B. eine Verschlüsselung des Bluetooth-Standards.

Eine weitere bevorzugte Ausgestaltung der Erfindung ist gekennzeichnet durch den Schritt des Aktualisierens der Zuordnung des einen oder der mehreren elektronischen Schlüssel des Funkmeldeempfängers zu der einen oder den mehreren Empfangsadressen über die erste Datenverbindung. Dies ist besonders effizient und nutzerfreundlich.

Ein weiterer Aspekt der Erfindung betrifft eine Funkrufanordnung mit einer Funkrufzentrale und einer Mehrzahl von Funkmeldeempfängern. Die Funkmeldeempfänger sind zur Speicherung eines oder mehrerer elektronischer Schlüssel eines ersten Verschlüsselungsmechanismus des Funksystems und einer oder mehrerer Empfangsadressen des Funksystems vorgesehen. Die Funkmeldeempfänger sind ferner zum Empfang von mittels des ersten Verschlüsselungsmechanismus verschlüsselten Nachrichten von der Funkrufzentrale über eine erste Datenverbindung vorgesehen. Die Funkrufanordnung ist dazu konfiguriert, die verschlüsselten Nachrichten von der Funkrufzentrale über eine zweite Datenverbindung an ein Anwendungsprogramm eines elektronischen Geräts, insbesondere eines Mobilfunkgerätes, zu übertragen. Das erste elektronische Gerät ist dazu konfiguriert, eine dritte Datenverbindung mit einem der Funkmeldeempfänger aufzubauen und die von der Funkrufzentrale empfangenen verschlüsselten Nachrichten an den Funkmeldeempfänger weiterzuleiten. Der Funkmeldeempfänger ist dazu konfiguriert, die von dem elektronischen Gerät empfangene verschlüsselte Nachricht zu entschlüsseln und die entschlüsselte Nachricht über die dritte Datenverbindung an das elektronische Gerät zu senden.

Gemäss einer Ausführungsform der Erfindung können die Funkmeldeempfänger ferner bei der Funkrufzentrale registriert werden.

Weitere Aspekte der Erfindung betreffen einen Funkmeldeempfänger, eine Funkrufzentrale und ein Anwendungsprogramm einer derartigen Funkrufanordnung.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung von Ausführungsbeispielen anhand der Figuren. Dabei zeigt:
Figur 1 schematisch eine Funkrufanordnung gemäss einer Ausführungsform der Erfindung;
Figur 2 schematisch eine Funkrufanordnung gemäss einer weiteren Ausführungsform der Erfindung;
Figur 3 ein Verfahren für die Erstellung und Zuweisung der Schlüssel zu Adressen in der Funkrufzentrale und in den Funkmeldeempfängern;
Figur 4 ein Verfahren zur Registrierung eines Funkmeldeempfängers und Authentifizierung eines Anwendungsprogramms in Funkrufanordnungen mit einem privaten Verschlüsselungskonzept; und
Figur 5 ein Flussablaufdiagramm eines Verfahrens zur parallelen Übertragung von verschlüsselten Nachrichten in einer Funkrufanordnung sowohl an einen Funkmeldeempfänger als auch an weiteres elektronisches Gerät.

### Weg(e) zur Ausführung der Erfindung

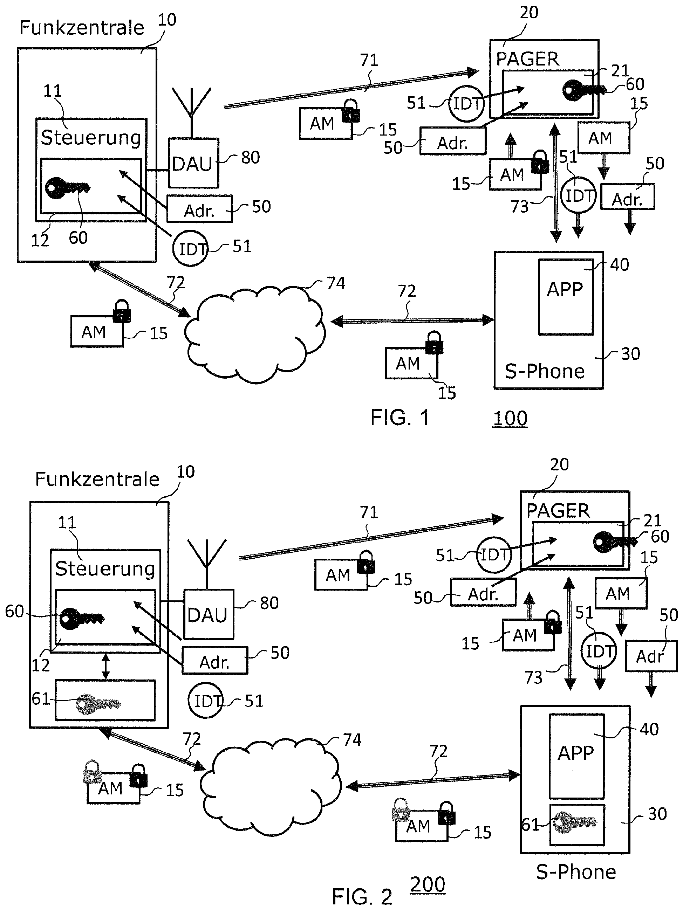

Figur 1 zeigt schematisch eine Funkrufanordnung 100 gemäss einer Ausführungsform der Erfindung. Die Funkrufanordnung 100 weist eine Funkrufzentrale 10 auf sowie eine Mehrzahl von Funkmeldeempfängern 20, wobei in der FIG. 1 nur ein Funkmeldeempfänger 20 gezeigt ist. Derartige Funkmeldeempfänger werden vielfach auch als Pager bezeichnet.

Den Funkmeldeempfängern 20 sind eine oder mehrere Empfangsadressen 50 zugeordnet, die in einem Speicher 21 abgelegt sind. Die Empfangsadressen 50 können gemäss Ausführungsformen der Erfindung z.B. einen Radio Identification Code (RIC) beinhalten, um digitale Funkmeldeempfänger einer Funkrufanordnung gemäss dem POCSAG-Protokoll anzusprechen und zu alarmieren. Zudem speichern die Funkmeldeempfänger 20 ein oder mehrere elektronische Schlüssel 60 in dem Speicher 21. Die elektronischen Schlüssel 60 sind Teil eines ersten Verschlüsselungsmechanismus der Funkrufanordnung 100. Die Schlüssel 60 des ersten Verschlüsselungsmechanismus werden von der Organisation, die die Funkrufanordnung 100 betreibt, verwaltet. Die Schlüssel 60 sind somit Teil eines Verschlüsselungskonzeptes der jeweiligen Organisation, z.B. der Feuerwehr. Die Schlüssel 60 des ersten Verschlüsselungsmechanismus sind graphisch durch einen schwarzen Schlüssel dargestellt. Der erste Verschlüsselungsmechanismus kann gemäss Ausführungsformen der Erfindung mittels eines symmetrischen Verschlüsselungsverfahrens implementiert werden. Dieses kann z.B auf dem International Data Encryption Algorithmus (IDEA), dem Advanced Encryption Standard (AES)-128 oder AES-256 basieren. Die elektronischen Schlüssel 60 sind somit gemäss einer bevorzugten Ausführungsform symmetrische Schlüssel. Gemäss anderen Ausführungsformen wären aber auch asymmetrische Verschlüsselungsverfahren denkbar.

Die Funkrufzentrale 10 kann mittels des ersten Verschlüsselungsmechanismus verschlüsselte Nachrichten 15 über eine erste Datenverbindung 71 an die Funkmeldeempfänger 20 senden. Dies können beispielsweise Alarmmeldungen (AM) einer Einsatzorganisation an Einsatzkräfte dieser Einsatzorganisation sein. Die Verschlüsselung der Nachricht 15 mittels des ersten Verschlüsselungsmechanismus ist in der Figur 1 mit einem schwarzen Schloss illustriert. Die erste Datenverbindung 71 kann gemäss Ausführungsformen der Erfindung als eine drahtlose Datenverbindung gemäss einem Funkrufprokoll, z.B. dem POCSAG-Standard oder dem FLEX-Protokoll, oder einem Mobilfunkstandard ausgebildet sein. Der Mobilfunkstandard kann z.B. ein Mobilfunkstandard der zweiten (2G), dritten (3G), vierten (4G) oder fünften (5G) Generation sein. Alternativ wäre auch eine low-power wide-area network (LPWAN) Verbindung möglich, z.B LoRa, LoRaWAN oder dem MIOTY.

Die Funkrufzentrale 10 weist eine zentrale Steuerungseinheit 11 auf, welche die Funkrufzentrale steuert. Die Steuerungseinheit 11 weist einen Speicher 12 auf, welcher die Schlüssel 60 des ersten Verschlüsselungsmechanismus speichert sowie die Empfangsadressen 50 der Funkmeldeempfänger 20. Im Speicher 12 können die Funkmeldeempfänger 20 ausserdem mit einem Identifikationstoken 51 registriert werden. Die zentrale Steuerungseinheit 11 kann beispielsweise auch eine Software-Platform für das Ressourcenmanagement von Einsatzkräften und die Fernkonfiguration von Funkmeldeempfängern umfassen, z.B. die Software-Plattform s.ONE^{™} der Firma Swissphone.

Die Steuerungseinheit 11 verschlüsselt die Nachrichten 15 mittels eines elektronischen Schlüssels 60 und sendet die verschlüsselten Nachrichten 15 mittels einer oder mittels mehrerer Funkbasisstation 80 an die Funkmeldeempfänger 20. In der Figur 1 ist nur eine Funkbasisstation gezeigt, welche somit insbesondere ein Master-Basisstation darstellt.

Die Funkrufzentrale 10 ist in der Figur 1 in stark vereinfachter und schematischer Form dargestellt, um wesentliche Aspekte der Erfindung zu erläutern. Die Funkrufzentrale 10 kann insbesondere noch diverse weitere Komponenten umfassen, die in der Figur 1 nicht dargestellt sind. So kann die Funkrufzentrale 10 z.B. einen Verschlüsselungsserver, einen Alarmserver, eine Eingabestelle, ein Gateway und/oder ein Leitsystem umfassen. Der Begriff Funkrufzentrale kann gemäss Ausführungsformen der Erfindung die gesamte vorgeschaltete IT-Infrastruktur bis zur Übergabe der Nachricht 15 an die entsprechende Funkbasisstation 80. Insbesondere können einzelne Komponenten der Funkrufzentrale 10 auch an verschiedenen Orten angeordnet werden. So kann gemäss Ausführungsformen der Erfindung der Verschlüsselungsserver z.B. an einem anderen Ort als der Alarmserver und die Leitstelle lokalisiert sein.

Die zentrale Steuerungseinheit 11 kann sich zum Beispiel bei einer Einsatzleitzentrale des Dienstes befinden, dessen Angehörige über die Funkrufanordnung alarmiert werden sollen. Die zentrale Steuerungseinheit 11 ist über eine Datenverbindung, z.B. über eine Datenverbindung gemäss dem TCP/IP Protokoll, mit der Funk-Basisstation 80 verbunden, die insbesondere als sogenannter "Master" konfiguriert ist. Die Datenverbindung kann drahtgebunden ausgestaltet sein, zum Beispiel als Ethernet-Leitung, oder sie kann als drahtlose Datenverbindung ausgeführt sein. Die Funkrufanordnung 100 kann aber mehrere nicht näher dargestellte nachgeschaltete Funkbasisstationen aufweisen, welche auch als Slave-Basisstationen bezeichnet werden.

Die Funk-Basisstationen werden auch als Digitaler Alarmumsetzer (DAU) bezeichnet. Gemäss Ausführungsformen kann die Funkrufanordnung mit mehreren Alarmringen gebildet sein. In jedem Alarmring können gemäss Ausführungsformen mehrere Funk-Basisstationen bzw. digitale Alarmumsetzer (DAU) vorgesehen sein, die als "Slave" konfiguriert sind. Die Alarmierung kann erfolgen, indem eine Alarmmeldung von der Funkrufzentrale 10 und dann vom "Master" DAU über Funk gleichzeitig an die Pager innerhalb seiner Funkabdeckung und an die "Slave" DAUs des ersten Alarmrings gesendet wird. Diese "Slave" DAUs senden die Alarmmeldung wiederum gleichzeitig über Funk an die Pager innerhalb ihrer Funkabdeckung und an die"Slave" DAUs des nächsten Alarmrings. So breitet sich der Alarm wellenförmig über die ganze von der Funkrufanordnung abgedeckte Region aus.

In einer anderen Ausgestaltung wird die Alarmmeldung zunächst über Mitteilungen im sogenannten Transportlayer an alle Funk-Basisstationen bzw. DAUs gegeben und erst dann erfolgt gleichzeitig und synchron durch alle DAUs die Aussendung der Alarmmeldung als Alarmsignal oder mit anderen Worten als Alarm über Funk an die Pager.

Das Format der Alarmmeldungen und deren Ablauf sind gemäss einer Ausführungsform der Erfindung durch ein Funkrufprotokoll, z.B. dem genannten POCSAG-Standard oder dem Flex-Protokoll bestimmt.

Neben der Übertragung der Nachrichten 15 an die Funkmeldeempfänger 20 kann die Funkrufanordnung 100 die verschlüsselten Nachrichten 15 von der Funkrufzentrale 10 auch über eine zweite Datenverbindung 72 an ein Anwendungsprogramm 40 eines elektronischen Geräts 30 übermitteln. Das elektronische Gerät 30 ist insbesondere ein Mobilfunkgerät, z.B. ein Smartphone.

Die zweite Datenverbindung 72 kann insbesondere eine Datenverbindung über das Internet 74 sein. Gemäss Ausführungsformen kann die zweite Datenverbindung insbesondere ein Push-Dienst des Betriebssystems des Mobilfunkgerätes 30 sein, z.B. ein Push-Dienst von iOS oder Android.

Das elektronische Gerät 30 ist dazu konfiguriert, eine dritte Datenverbindung 73 mit einem der Funkmeldeempfänger 20 aufzubauen und die von der Funkrufzentrale 10 empfangenen verschlüsselten Nachrichten 15 an den Funkmeldeempfänger 20 zur Entschlüsselung weiterzuleiten. Die dritte Datenverbindung 73 kann insbesondere eine drahtlose lokale Datenverbindung sein, z.B. eine Datenverbindung gemäss einem Bluetooth-Standard, z.B. gemäss dem Bluetooth Low Energy (BLE) Standard.

Das elektronische Gerät 30 kann insbesondere ein persönliches Gerät der jeweiligen Einsatzkraft der Einsatzorganisation sein. Dieses persönliche Gerät kann z. B. im Rahmen einer «Bring Your Own Device» (BYOD) Policy von der Einsatzorganisation zugelassen sein. Das elektronische Gerät 30 hat jedoch nicht einen Schlüssel 60 des ersten Verschlüsselungsmechanismus und ist daher allein nicht in der Lage, die von der Funkrufzentrale 10 empfangene Nachricht zu entschlüsseln.

Besitzt die entsprechende Einsatzkraft aber zudem einen Funkmeldeempfänger 20 der Funkrufanordnung der Einsatzorganisation, kann dieser Funkmeldeempfänger 20 von der Einsatzkraft dazu genutzt werden, die von dem persönlichen elektronischen Gerät 30 der Einsatzkraft empfangenen verschlüsselten Nachrichten zu entschlüsseln.

Entsprechend ist der Funkmeldeempfänger 20 dazu konfiguriert, die von dem persönlichen elektronischen Gerät 30 empfangene verschlüsselte Nachricht 15 zu entschlüsseln und die entschlüsselte Nachricht 15 über die dritte Datenverbindung 73 zurück an das elektronische Gerät 30 zu senden. Dort kann sie dann von der Einsatzkraft auf dem Bildschirm des persönlichen elektronischen Geräts 30 angesehen werden.

Figur 2 zeigt schematisch eine Funkrufanordnung 200 gemäss einer weiteren Ausführungsform der Erfindung. Die Funkrufanordnung 200 entspricht weitgehend der Funkrufanordnung 100 gemäss FIG. 1. Daher werden für gleiche Komponenten auch gleiche Bezugszeichen verwendet. Insbesondere weist die Funkrufanordnung 200 eine Funkrufzentrale 10, eine Mehrzahl von Funkmeldeempfängern 20 und ein elektronisches Gerät 30 mit einem Anwendungsprogramm 40 auf.

Bei der Funkrufanordnung 200 wird die Nachricht 15, die von der Funkrufzentrale 10 an das elektronische Gerät 30 bzw. an das Anwendungsprogram auf dem elektronischen Gerät 30 gesendet wird, nicht nur mit dem ersten Verschlüsselungsmechanismus und den entsprechenden elektronischen Schlüsseln 60 verschlüsselt, sondern noch zusätzlich mittels eines zweiten Verschlüsselungsmechanismus. Somit handelt es sich um eine doppelte Verschlüsselung. Der zweite Verschlüsselungsmechanismus kann insbesondere eine Ende-zu-Ende Verschlüsselung zwischen der Funkrufzentrale 10 und dem Anwendungsprogram 40 sein. Gemäss Ausführungsformen kann die Steuerungseinheit 11 hierzu das Verschlüsselungssystem des oben erwähnten Push-Dienstes des Mobilfunkgerätes 30 verwenden, z.B. den Verschlüsselungsmechanismus von iOS oder Android. In der FIG. 2 werden die elektronischen Schlüssel des zweiten Verschlüsselungsmechanismus mittels grauer Schlüssel 61 illustriert und mit dem zweiten Verschlüsselungsmechanismus verschlüsselte Nachrichten 15 mit einem grauen Schloss.

Auf dem elektronischen Gerät 30 wird die Verschlüsselung des zweiten Verschlüsselungsmechanismus wieder entschlüsselt, z.B. von dem Push-Dienst des Betriebssystems, und somit entfernt. Dann wird die Nachricht 15, welche nur noch mit dem ersten Verschlüsselungsmechanismus verschlüsselt ist, an den Funkmeldeempfänger 20 über die dritte Datenverbindung 73 weitergeleitet.

Gemäss Ausführungsformen kann die dritte Datenverbindung einen weiteren (dritten) Verschlüsselungsmechanismus umfassen, z.B. eine Verschlüsselung des Bluetooth-Standards.

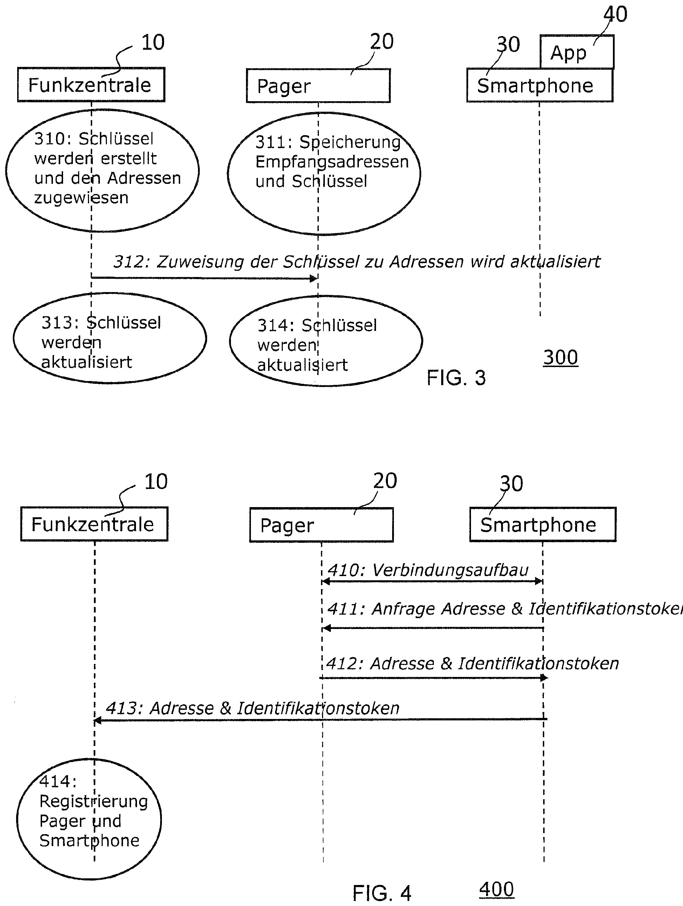

Die Figuren 3, 4 und 5 zeigen Flussablaufdiagramme von Aspekten eines Verfahrens zur Übertragung von verschlüsselten Nachrichten in einer Funkrufanordnung gemäss Ausführungsformen der Erfindung, z.B. in den Funkrufanordnungen 100 und 200 der Figuren 1 und 2. Bei der nachfolgenden Erläuterung des Verfahrens wird auf die in den Figuren 1 und 2 dargestellten und oben erläuterten Komponenten bzw. Elemente Bezug genommen.

FIG. 3 zeigt ein initiales Verfahren 300 für die Erstellung und Zuweisung der elektronischen Schlüssel 60 zu den Empfangsadressen 50 in der Funkrufzentrale und in den Funkmeldeempfängern, ein nachfolgendes Verfahren zur Aktualisierung der Zuweisung der Schlüssel 60 zu den Empfangsadressen 50 im Funkmeldeempfänger/Pager 20 und schliesslich das Schlüssel- resp. Adressen-Update.

In einem Schritt 310 werden in der Funkrufzentrale 10 Schlüssel 60 generiert bzw. erstellt und einer oder mehreren Empfangsadressen 50 zugewiesen. Die Empfangsadressen 50 und der elektronische Schlüssel 60 werden in dem Speicher 12 der Funkrufzentrale 10 gespeichert.

In einem Schritt 311 werden eine oder mehrere Empfangsadressen 50 sowie die zugehörigen Schlüssel 60 im Funkmeldeempfänger 20 gespeichert, und zwar in dessen Speicher 21. Dieser Schritt 311 kann beispielsweise bei der erstmaligen Inbetriebnahme des Funkmeldeempfängers 20 durch eine Programmierung des Funkmeldeempfängers 20 durch die Leitstelle oder eine zuständige Person der Einsatzorganisation erfolgen. Eine solche Person, die für die Verwaltung der Schlüssel und die Organisation des Verschlüsselungskonzeptes der jeweiligen Einsatzorganisation zuständig ist, wird auch als Funkwart bezeichnet. Die erstmalige Programmierung des Funkmeldeempfängers erfolgt gemäss Ausführungsformen der Erfindung über eine drahtgebundene Schnittstelle, z.B. über eine USB-Verbindung.

Nach der erstmaligen Inbetriebnahme eines Funkmeldeempfängers 20 kann in einem Schritt 312 die Zuordnung von Schlüsseln 60 zu Empfangsadressen 50 regelmässig über die erste Datenverbindung aktualisiert werden.

In einem Schritt 313 können der einen oder den mehreren Empfangsadressen in der Funkrufzentrale ausserdem komplett neue Schlüssel zugeordnet werden. Per Fernprogrammierung werden diese in einem Schritt 314 im Funkmeldeempfänger aktualisiert, z.B. über eine USB-Verbindung. Gemäss Ausgestaltungen der Erfindung ist dies auch über eine drahtlose Datenverbindung (Over the air) möglich.

FIG. 4 zeigt ein Verfahren zur Registrierung von Funkmeldeempfängern und Authentifizierung eines Anwendungsprogramms in Funkrufanordnungen mit einem privaten Verschlüsselungskonzept.

In einem Schritt 410 wird die oben beschriebene dritte Datenverbindung 73 zwischen dem Funkmeldeempfänger 20 und dem elektronischen Gerät 30 aufgebaut, z.B. eine Bluetooth-Verbindung.

Gemäss einer Ausführungsform fragt das Anwendungsprogramm 40 beim erstmaligen Pairen mit dem Funkmeldeempfänger 20 nach einem Code, welcher auf dem Bildschirm des Funkmeldeempfängers 20 erscheint. Nur wenn dieser Code richtig eingegeben wird, wird die dritte Datenverbindung aktiviert. Damit kann verhindert werden, dass ein Anwendungsprogramm unautorisiert in Betrieb genommen wird. Ein derartiger Mechanismus wird beispielsweise von dem Bluetooth-Standard unterstützt.

Wenn ein zweites Anwendungsprogramm mit dem Funkmeldeempfänger verbunden werden soll, muss auf diesem zweiten Anwendungsprogramm gemäss einer Ausführungsform wieder ein (neuer) Code eingegeben werden, der auf dem Bildschirm des Funkmeldeempfängers 20 erscheint. Falls der Träger dies tut, wird die dritte Datenverbindung zum ersten Anwendungsprogramm unterbrochen, respektive bei einem erneuten Verbindungsaufbau muss erneut ein (wieder neuer) Code eingegeben werden.

In einem Schritt 411 sendet das elektronische Gerät 30 bzw. das Anwendungsprogramm 40 eine Anfrage für die eine oder die mehreren Empfangsadressen 50 und für einen Identifikationstoken 51 an den Funkmeldeempfänger 20. Der Funkmeldeempfänger 20 sendet dann in einem Schritt 412 seine Empfangsadresse 50 oder mehrere Empfangsadressen 50 und seinen Identifikationstoken 51, der in dem Speicher 21 gespeichert ist, z.B. seine Seriennummer, an das elektronische Gerät 30 bzw. an das Anwendungsprogramm 40 des elektronischen Geräts über die dritte Datenverbindung 73. Der Schritt 412 kann gemäss Ausführungsformen auch vom Funkmeldeempfänger 20 initiiert werden ohne explizite Anfrage seitens des Anwendungsprogramms. Das elektronische Gerät 30 bzw. das Anwendungsprogramm 40 leiten dann die empfangene eine oder die mehreren Empfangsadressen 50 und den empfangenen Identifikationstoken 51 in einem Schritt 413 an die Funkrufzentrale 10 weiter.

Anschliessend werden der Funkmeldeempfänger 20 und das Anwendungsprogramm 40 des elektronischen Geräts 30 zusammen mit dem korrespondierenden Identifikationstoken 51 und der einen oder den mehreren Adressen 50 in einem Schritt 414 bei der Funkrufzentrale 10 registriert und die entsprechenden Registrierungs- bzw. Anmeldedaten werden in dem Speicher 12 der Steuerungseinheit 11 abgelegt. Das Anwendungsprogramm 40 kann beispielsweise mittels einer Device-ID und/oder mittels Push-Token registriert werden. Derartige Mechanismen werden beispielsweise von den Betriebssystemen iOS oder Android zur Verfügung gestellt und sind dem Fachmann bekannt.

Danach werden Nachrichten, z.B. Alarmmeldungen an den entsprechenden Funkmeldeempfänger 20 nicht nur über die erste Datenverbindung 71 an den Funkmeldeempfänger 20 gesendet, sondern auch über die zweite Datenverbindung 72 an das registrierte Anwendungsprogramm 40 des elektronischen Geräts 30.

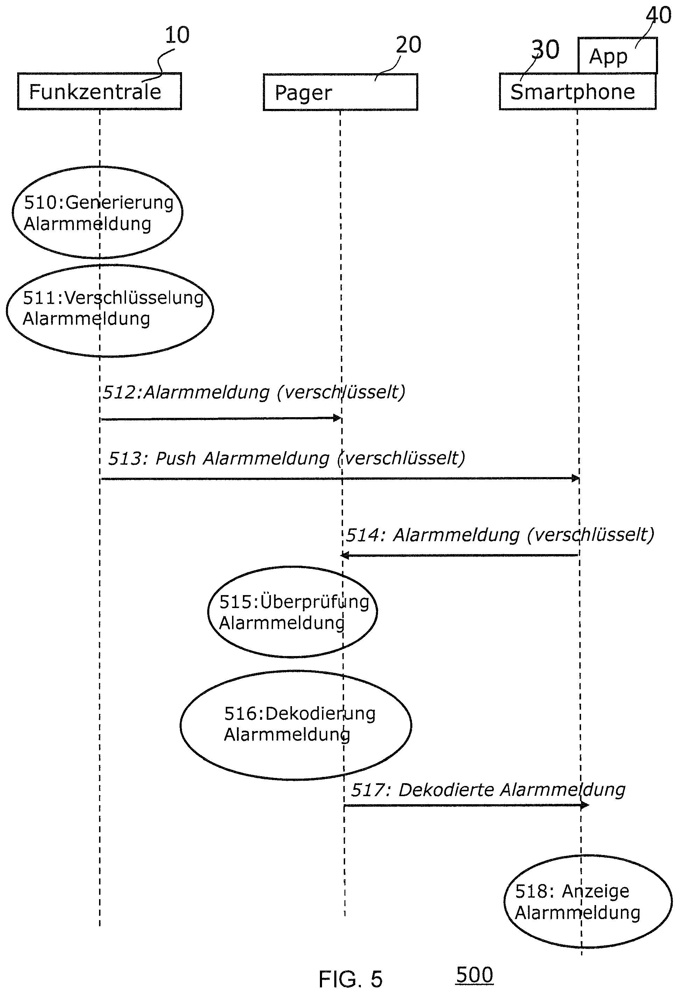

Dies wird nachfolgend in der Figur 5 erläutert, welche die parallele Übertragung von verschlüsselten Nachrichten, z.B. von Alarmmeldungen in einer Funkrufanordnung sowohl an einen Funkmeldeempfänger 20 als auch an weiteres elektronisches Gerät 30 illustriert. Das elektronische Gerät 30 ist in diesem Beispiel exemplarisch als Smartphone ausgeführt.

Nachfolgend werden die verschlüsselten Nachrichten exemplarisch als verschlüsselte Alarmmeldungen 15 bezeichnet.

In einem Schritt 510 wird eine Alarmmeldung generiert, welche über die Funkrufanordnung ausgesendet werden soll. In einem Schritt 511 wird diese Alarmmeldung 15 dann mittels eines elektronischen Schlüssels 60 in der Funkrufzentrale 10 verschlüsselt, z.B. von einem Verschlüsselungsserver.

In einem Schritt 512 wird die verschlüsselte Alarmmeldung 15 von der Funkrufzentrale 10 über die erste Datenverbindung 71, z.B. über eine POCSAG Datenverbindung, an die Funkmeldeempfänger 20 gesendet.

Parallel dazu wird die verschlüsselte Alarmmeldung 15 von der Funkzentrale 10 in einem Schritt 513 über die zweite Datenverbindung 72, insbesondere über eine Internet-Datenverbindung, an das Anwendungsprogramm 40 des Smartphones 30 geschickt, welches zuvor wie zu FIG. 4 beschrieben, registriert worden ist. Wie erläutert kann dies z.B. von einem Push-Dienst erfolgen und auch eine weitere Verschlüsselung mit einem zweiten Verschlüsselungsmechanismus umfassen.

In einem Schritt 514 wird die verschlüsselte Alarmmeldung 15 von dem Smartphone 30 an den Funkmeldeempfänger 20 über die dritte Datenverbindung 73 weitergeleitet.

Gegebenenfalls wird der zweite Verschlüsselungsmechanismus des Push-Dienstes vorher entfernt.

In einem Schritt 515 kann der Funkmeldeempfänger 20 die verschlüsselte Alarmmeldung 15 überprüfen. Diese Überprüfung umfasst insbesondere eine Überprüfung, ob der Funkmeldeempfänger 20 die Empfangsadresse 50 der Alarmmeldung gespeichert hat und somit kennt und ob er den dazu passenden elektronischen Schlüssel 60 gespeichert hat. Dieser Schritt 515 kann auch indirekt erfolgen.

Ist dies der Fall, entschlüsselt bzw. dekodiert der Funkmeldeempfänger 20 die von dem Smartphone 30 weitergeleitete verschlüsselte Alarmmeldung 15 in einem Schritt 516 mittels des in dem Funkmeldeempfänger 20 gespeicherten elektronischen Schlüssels 60.

In einem Schritt 517 sendet der Funkmeldeempfänger 20 die entschlüsselte bzw. dekodierte Alarmmeldung 15 über die dritte Datenverbindung 73 an das Smartphone 30 zurück.

Schliesslich zeigt das Anwendungsprogramm 40 die entschlüsselte Alarmmeldung in einem Schritt 518 auf einem Display des Smartphones 30 an.

Während in der vorliegenden Anmeldung bevorzugte Ausführungen der Erfindung beschrieben sind, ist klar darauf hinzuweisen, dass die Erfindung durch folgende Ansprüche definiert wird.

## Patentansprüche

1. Verfahren zur Übertragung von verschlüsselten Nachrichten in einer Funkrufanordnung, wobei die Funkrufanordnung (100; 200) eine Funkrufzentrale (10), und eine Mehrzahl von Funkmeldeempfängern (20) umfasst, wobei
die Funkmeldeempfänger (20) einen oder mehrere elektronische Schlüssel (60) eines ersten Verschlüsselungsmechanismus und eine oder mehrere Empfangsadressen (50) der Funkrufanordnung speichern, wobei die einen oder die mehreren elektronischen Schlüssel des ersten Verschlüsselungsmechanismus von einer Einsatzorganisation als privates Verschlüsselungssystem organisiert sind;
und die Funkmeldeempfänger (20) zum Empfang von mittels des ersten Verschlüsselungsmechanismus verschlüsselten Nachrichten von der Funkrufzentrale (10) über eine erste Datenverbindung (71) vorgesehen sind;
wobei das Verfahren die folgenden Schritte aufweist:
Senden einer der verschlüsselten Nachrichten von der Funkrufzentrale (10) über eine zweite Datenverbindung (72) an ein Anwendungsprogramm (40) eines elektronischen Gerätes (30), insbesondere eines Mobilfunkgerätes;
Weiterleiten der verschlüsselten Nachricht von dem elektronischen Gerät (30) an den Funkmeldeempfänger (20) über eine dritte Datenverbindung (73);
Entschlüsseln der von dem elektronischen Gerät (30) weitergeleiteten verschlüsselten Nachricht durch den Funkmeldeempfänger (20) mittels eines der in dem Funkmeldeempfänger (20) gespeicherten elektronischen Schlüssel (60);
Senden der entschlüsselten Nachricht über die dritte Datenverbindung (73) von dem Funkmeldeempfänger (20) an das elektronische Gerät (30); und
Anzeigen der entschlüsselten Nachricht von dem Anwendungsprogramm (40) auf dem elektronischen Gerät (30) .

2. Verfahren nach Anspruch 1, **gekennzeichnet durch** die Schritte:
Herstellen der dritten Datenverbindung (73) und Senden einer Anfrage für die eine oder die mehreren Empfangsadressen (50) des Funkmeldeempfängers und einen Identifikationstoken (51) von dem elektronischen Gerät (30) an den Funkmeldeempfänger (20);
Senden der einen oder der mehreren Empfangsadressen (50) und des Identifikationstokens (51) von dem Funkmeldeempfänger (20) an das Anwendungsprogramm (40) des elektronischen Geräts (30) über die dritte Datenverbindung (73);
Senden der einen oder der mehreren Empfangsadressen (50) und des Identifikationstokens (51) von dem Anwendungsprogramm (40) des elektronischen Gerätes (30) an die Funkrufzentrale (10).

3. Verfahren nach Anspruch 2, **gekennzeichnet durch** den weiteren Schritt:
Registrieren des Funkmeldeempfängers (20) und des Anwendungsprogramms (40) bei der Funkrufzentrale (10).

4. Verfahren nach einem der vorhergehenden Ansprüche, **dadurch gekennzeichnet, dass**
die Funkrufzentrale (10) die mittels des ersten Verschlüsselungsmechanismus verschlüsselte Nachricht zusätzlich mittels eines zweiten Verschlüsselungsmechanismus verschlüsselt;
die Funkrufzentrale (10) die mit dem ersten und dem zweiten Verschlüsselungsmechanismus verschlüsselte Nachricht über die zweite Datenverbindung (72) an das Anwendungsprogramm (40) des elektronischen Gerätes (30) sendet; und
das Anwendungsprogram (40) den zweiten Verschlüsselungsmechanismus der Nachricht entschlüsselt und nur die mit dem ersten Verschlüsselungsmechanismus verschlüsselte Nachricht an den Funkmeldeempfänger (20) über die dritte Datenverbindung (73) weiterleitet.

5. Verfahren nach einem der vorhergehenden Ansprüche, **dadurch gekennzeichnet, dass** der zweite Verschlüsselungsmechanismus eine Ende-zu-Ende Verschlüsselung zwischen der Funkrufzentrale (10) und dem Anwendungsprogram (40) ist.

6. Verfahren nach einem der vorhergehenden Ansprüche, **dadurch gekennzeichnet, dass** der erste Verschlüsselungsmechanismus ein symmetrisches Verschlüsselungsverfahren ist.

7. Verfahren nach einem der vorhergehenden Ansprüche, **dadurch gekennzeichnet, dass**
die erste Datenverbindung (71)eine drahtlose Datenverbindung
gemäss einem Funkrufprotokoll, insbesondere dem POCSAG-Standard;
gemäss einem Mobilfunkstandard; oder
gemäss einem low-power wide-area network (LPWAN) ist;
die zweite Datenverbindung (72) eine Datenverbindung über das Internet ist, insbesondere ein Push-Dienst des Betriebssystems des elektronischen Geräts; und/oder
die dritte Datenverbindung (73) eine drahtlose lokale Datenverbindung, insbesondere eine Datenverbindung gemäss einem Bluetooth-Standard, ist.

8. Verfahren nach einem der vorhergehenden Ansprüche, **gekennzeichnet durch** den Schritt
Aktualisieren der Zuordnung des einen oder der mehreren elektronischen Schlüssel (60) des Funkmeldeempfängers (20) zu der einen oder den mehreren Empfangsadressen (50) über die erste Datenverbindung.

9. Funkrufanordnung mit einer Funkrufzentrale und einer Mehrzahl von Funkmeldeempfängern, wobei
die Funkmeldeempfänger zur Speicherung eines oder mehrerer elektronischer Schlüssel eines ersten Verschlüsselungsmechanismus der Funkrufanordnung und einer oder mehrerer Empfangsadressen der Funkrufanordnung vorgesehen sind, wobei die einen oder die mehreren elektronischen Schlüssel des ersten Verschlüsselungsmechanismus von einer Einsatzorganisation als privates Verschlüsselungssystem organisiert sind;
die Funkmeldeempfänger zum Empfang von mittels des ersten Verschlüsselungsmechanismus verschlüsselten Nachrichten von der Funkrufzentrale über eine erste Datenverbindung vorgesehen sind;
wobei die Funkrufanordnung dazu konfiguriert ist, eine der verschlüsselten Nachrichten von der Funkrufzentrale über eine zweite Datenverbindung an ein Anwendungsprogramm eines elektronischen Geräts, insbesondere eines Mobilfunkgerätes, zu übertragen;
das erste elektronische Gerät dazu konfiguriert ist, eine dritte Datenverbindung mit einem der Funkmeldeempfänger aufzubauen und die von der Funkrufzentrale empfangene verschlüsselte Nachricht an den Funkmeldeempfänger weiterzuleiten; und
der Funkmeldeempfänger dazu konfiguriert ist, die von dem elektronischen Gerät empfangene verschlüsselte Nachricht zu entschlüsseln und die entschlüsselte Nachricht über die dritte Datenverbindung an das elektronische Gerät zu senden.

10. Funkrufanordnung nach Anspruch 9, **dadurch gekennzeichnet, dass**
der Funkmeldeempfänger dazu konfiguriert ist, einen Identifikationstoken und die eine oder die mehreren Empfangsadressen an das elektronische Gerät zu senden; und
das elektronische Gerät dazu konfiguriert ist, den Identifikationstoken und die eine oder die mehrere Empfangsadressen an die Funkrufzentrale zu senden.

11. Funkmeldeempfänger, der für eine Funkrufanordnung gemäss Anspruch 9 oder 10 konfiguriert ist, wobei
der Funkmeldeempfänger zur Speicherung ein oder mehrerer Empfangsadressen und zur Speicherung eines oder mehrerer elektronischer Schlüssel eines ersten Verschlüsselungsmechanismus der Funkrufanordnung vorgesehen ist, wobei die einen oder die mehreren elektronischen Schlüssel des ersten Verschlüsselungsmechanismus von einer Einsatzorganisation als privates Verschlüsselungssystem organisiert sind;
der Funkmeldeempfänger zum Empfang von mittels des ersten Verschlüsselungsmechanismus verschlüsselten Nachrichten von der Funkrufzentrale über eine erste Datenverbindung vorgesehen ist;
der Funkmeldeempfänger dazu konfiguriert ist, eine dritte Datenverbindung mit einem elektronischen Gerät, insbesondere einem Smartphone, aufzubauen und von dem elektronischen Gerät über die dritte Datenverbindung von der Funkrufzentrale an das elektronische Gerät gesendete verschlüsselten Nachrichten zu empfangen; und
der Funkmeldeempfänger dazu konfiguriert ist, die von dem elektronischen Gerät empfangene verschlüsselte Nachricht zu entschlüsseln und die entschlüsselte Nachricht über die dritte Datenverbindung an das elektronische Gerät zu senden.

12. Funkrufzentrale, welche für eine Funkrufanordnung gemäss Anspruch 9 oder 10 konfiguriert ist, wobei die Funkrufzentrale konfiguriert ist,
Nachrichten mittels einer oder mehrerer elektronischer Schlüssel eines ersten Verschlüsselungsmechanismus zu verschlüsseln und über eine erste Datenverbindung an Funkmeldeempfänger zu senden, wobei die einen oder die mehreren elektronischen Schlüssel des ersten Verschlüsselungsmechanismus von einer Einsatzorganisation als privates Verschlüsselungssystem organisiert sind; und
eine der verschlüsselten Nachrichten über eine zweite Datenverbindung an ein Anwendungsprogramm eines elektronischen Geräts, insbesondere eines Mobilfunkgerätes, zu übertragen.

13. Anwendungsprogramm für ein elektronisches Gerät, insbesondere für ein Mobilfunkgerät, wobei das elektronische Gerät Teil einer Funkrufanordnung gemäss Anspruch 9 oder 10 ist und zum Empfang von Nachrichten der Funkrufanordnung konfiguriert ist, wobei das Anwendungsprogramm dazu konfiguriert ist,
mittels eines ersten Verschlüsselungsmechanismus verschlüsselte Nachrichten von der Funkrufzentrale über eine zweite Datenverbindung zu empfangen, wobei die einen oder die mehreren elektronischen Schlüssel des ersten Verschlüsselungsmechanismus von einer Einsatzorganisation als privates Verschlüsselungssystem organisiert sind;
mit einem Funkmeldeempfänger der Funkrufanordnung eine dritte Datenverbindung aufzubauen und die von der Funkrufzentrale empfangenen verschlüsselten Nachrichten an den Funkmeldeempfänger weiterzuleiten; und
von dem Funkmeldeempfänger die entschlüsselten Nachrichten über die dritte Datenverbindung zu empfangen und anzuzeigen.

## Claims

1. Method for transmitting encrypted messages in a paging system, wherein the paging system (100; 200) comprises a paging center (10) and a plurality of paging receivers (20), wherein
the paging receivers (20) store one or more electronic keys (60) of a first encryption mechanism and one or more receiving addresses (50) of the paging system, wherein the one or more electronic keys of the first encryption mechanism are organized by an operational organization as a private encryption system;
and the paging receivers (20) are configured to receive messages encrypted using the first encryption mechanism from the paging center (10) via a first data connection (71);
wherein the method comprises the following steps:
sending one of the encrypted messages from the paging center (10) via a second data connection (72) to an application program (40) of an electronic device (30), in particular a mobile radio device;
forwarding the encrypted message from the electronic device (30) to the paging receiver (20) via a third data connection (73);
decrypting the encrypted message forwarded by the electronic device (30) by the paging receiver (20) using one of the electronic keys (60) stored in the paging receiver (20);
sending the decrypted message via the third data connection (73) from the paging receiver (20) to the electronic device (30); and
displaying the decrypted message by the application program (40) on the electronic device (30).

2. Method according to claim 1, **characterized by** the steps:
establishing the third data connection (73) and sending a request for the one or more receiving addresses (50) of the paging receiver and an identification token (51) from the electronic device (30) to the paging receiver (20);
sending the one or more receiving addresses (50) and the identification token (51) from the paging receiver (20) to the application program (40) of the electronic device (30) via the third data connection (73);
sending the one or more receiving addresses (50) and the identification token (51) from the application program (40) of the electronic device (30) to the paging center (10).

3. Method according to claim 2, **characterized by** the further step of:
registering the paging receiver (20) and the application program (40) with the paging center (10).

4. Method according to any one of the preceding claims, **characterized in that**
the paging center (10) additionally encrypts the message encrypted by means of the first encryption mechanism by means of a second encryption mechanism;
the paging center (10) sends the message encrypted with the first and second encryption mechanisms to the application program (40) of the electronic device (30) via the second data connection (72); and
the application program (40) decrypts the second encryption mechanism of the message and forwards only the message encrypted with the first encryption mechanism to the paging receiver (20) via the third data connection (73).

5. Method according to any one of the preceding claims, **characterized in that** the second encryption mechanism is end-to-end encryption between the paging center (10) and the application program (40).

6. Method according to any one of the preceding claims, **characterized in that** the first encryption mechanism is a symmetric encryption method.

7. Method according to any one of the preceding claims, **characterized in that**
the first data connection (71) is a wireless data connection
according to a paging protocol, in particular the POCSAG standard;
according to a mobile communications standard; or
according to a low-power wide-area network (LPWAN);
the second data connection (72) is a data connection via the Internet, in particular a push service of the operating system of the electronic device; and/or
the third data connection (73) is a wireless local data connection, in particular a data connection according to a Bluetooth standard.

8. Method according to any one of the preceding claims, **characterized by** the step of
updating the assignment of the one or more electronic keys (60) of the paging receiver (20) to the one or more receiving addresses (50) via the first data connection.

9. Paging system with a paging center and a plurality of paging receivers, wherein
the paging receivers are provided for storing one or more electronic keys of a first encryption mechanism of the paging system and one or more receiving addresses of the paging system, wherein the one or more electronic keys of the first encryption mechanism are organized by an operational organization as a private encryption system;
the paging receivers are configured to receive messages encrypted using the first encryption mechanism from the paging center via a first data connection;
wherein the paging system is configured to transmit one of the encrypted messages from the paging center via a second data connection to an application program of an electronic device, in particular a mobile radio device;
the first electronic device is configured to establish a third data connection with one of the paging receivers and to forward the encrypted message received from the paging center to the paging receiver; and
the paging receiver is configured to decrypt the encrypted message received from the electronic device and to send the decrypted message to the electronic device via the third data connection.

10. Paging system according to claim 9, **characterized in that**
the paging receiver is configured to send an identification token and the one or more receiving addresses to the electronic device; and
the electronic device is configured to send the identification token and the one or more receiving addresses to the paging center.

11. Paging receiver configured for a paging system according to claim 9 or 10, wherein
the paging receiver is provided for storing one or more receiving addresses and for storing one or more electronic keys of a first encryption mechanism of the paging system, wherein the one or more electronic keys of the first encryption mechanism are organized by an operational organization as a private encryption system;
the paging receiver is provided to receive messages encrypted using the first encryption mechanism from the paging center via a first data connection;
the paging receiver is configured to establish a third data connection with an electronic device, in particular a smartphone, and to receive encrypted messages sent from the paging center to the electronic device via the third data connection; and
the paging receiver is configured to decrypt the encrypted message received from the electronic device and to send the decrypted message to the electronic device via the third data connection.

12. Paging center configured for a paging system according to claim 9 or 10, wherein the paging center is configured to
encrypt messages by means of one or more electronic keys of a first encryption mechanism and send them to paging receivers via a first data connection, wherein the one or more electronic keys of the first encryption mechanism are organized by an operational organization as a private encryption system; and
transmitting one of the encrypted messages via a second data connection to an application program of an electronic device, in particular a mobile radio device.

13. Application program for an electronic device, in particular for a mobile radio device, wherein the electronic device is part of a paging system according to claim 9 or 10 and is configured to receive messages from the paging system, wherein the application program is configured to
receive messages encrypted by means of a first encryption mechanism from the paging center via a second data connection, wherein the one or more electronic keys of the first encryption mechanism are organized by an operational organization as a private encryption system;
establishing a third data connection with a paging receiver of the paging system and forwarding the encrypted messages received from the paging center to the paging receiver; and
receiving the decrypted messages from the paging receiver via the third data connection and displaying them.

## Revendications

1. Procédé de transmission de messages cryptés dans un système d'appel radio, dans lequel le système d'appel radio (100 ; 200) comprend une centrale d'appel radio (10) et une pluralité de récepteurs d'appel radio (20), dans lequel
les récepteurs d'appel radio (20) stockent une ou plusieurs clés électroniques (60) d'un premier mécanisme de cryptage et une ou plusieurs adresses de réception (50) du système d'appel radio, dans lequel la une ou les plusieurs clés électroniques du premier mécanisme de cryptage sont organisées par une organisation utilitaire comme système de cryptage privé ; et
les récepteurs d'appel radio (20) sont prévus pour recevoir des messages cryptés au moyen du premier mécanisme de cryptage provenant de la centrale d'appel radio (10) via une première connexion de données (71) ;
dans lequel le procédé comprend les étapes suivantes :
envoyer un des messages cryptés depuis la centrale d'appel radio (10) via une deuxième liaison de données (72) à un programme d'application (40) d'un appareil électronique (30), en particulier d'un appareil de téléphonie mobile ;
transmettre du message crypté de l'appareil électronique (30) au récepteur d'appel radio (20) via une troisième liaison de données (73) ;
décrypter le message crypté transmis par l'appareil électronique (30) par le récepteur d'appel radio (20) à l'aide d'une des clés électroniques (60) enregistrées dans le récepteur d'appel radio (20) ;
envoyer le message décrypté via la troisième connexion de données (73) depuis le récepteur d'appel radio (20) à l'appareil électronique (30) ; et
afficher le message décrypté par le programme d'application (40) sur l'appareil électronique (30).

2. Procédé selon la revendication 1, **caractérisé par** les étapes suivantes :
établir la troisième connexion de données (73) et envoyer une demande pour la ou les adresses de réception (50) du récepteur d'appel radio (20) et un jeton d'identification (51) depuis l'appareil électronique (30) vers le récepteur d'appel radio (20) ;
envoyer la ou les adresses de réception (50) et le jeton d'identification (51) du récepteur d'appel radio (20) au programme d'application (40) de l'appareil électronique (30) via la troisième connexion de données (73) ;
envoyer la ou les adresses de réception (50) et le jeton d'identification (51) depuis le programme d'application (40) de l'appareil électronique (30) vers la centrale d'appel radio (10).

3. Procédé selon la revendication 2, **caractérisé par** l'étape supplémentaire suivante :
enregistrer le récepteur d'appel radio (20) et le programme d'application (40) auprès la centrale d'appel radio (10).

4. Procédé selon l'une des revendications précédentes, **caractérisé en ce que**
la centrale d'appel radio (10) crypte le message crypté au moyen du premier mécanisme de cryptage à l'aide d'un deuxième mécanisme de cryptage ;
la centrale d'appel radio (10) envoie le message crypté à l'aide du premier et du deuxième mécanisme de cryptage à l'adresse via la deuxième connexion de données (72) ; et
le programme d'application (40) décrypte le deuxième mécanisme de cryptage du message et ne transmet que le message crypté à l'aide du premier mécanisme de cryptage au récepteur d'appel radio (20) via la troisième connexion de données (73).

5. Procédé selon l'une des revendications précédentes, **caractérisé en ce que** le deuxième mécanisme de cryptage est un cryptage de bout en bout entre la centrale d'appel radio (10) et le programme d'application (40).

6. Procédé selon l'une des revendications précédentes, **caractérisé en ce que** le premier mécanisme de cryptage est un procédé de cryptage symétrique.

7. Procédé selon l'une des revendications précédentes, **caractérisé en ce que**
la première connexion de données (71) est une connexion de données sans fil
selon un protocole d'appel radio, en particulier la norme POCSAG ;
conforme à une norme de téléphonie mobile ; ou
conforme à un réseau étendu à faible puissance (LPWAN) ;
la deuxième connexion de données (72) est une connexion de données via Internet, en particulier un service push du système d'exploitation de l'appareil électronique ; et/ou
la troisième connexion de données (73) est une connexion de données locale sans fil, en particulier une connexion de données selon une norme Bluetooth.

8. Procédé selon l'une des revendications précédentes, **caractérisé par** l'étape de
mettre à jour l'attribution de la ou des clés électroniques (60) du récepteur d'appel radio (20) à la ou aux adresses de réception (50) via la première connexion de données.

9. Système d'appel radio comprenant une centrale d'appel radio et une pluralité de récepteurs d'appel radio , dans lequel
les récepteurs d'appel radio sont prévus pour stocker une ou plusieurs clés électroniques d'un premier mécanisme de cryptage du système d'appel radio et une ou plusieurs adresses de réception du système d'appel radio, dans lequel la une ou les plusieurs clés électroniques du premier mécanisme de cryptage sont organisées par une organisation utilitaire comme système de cryptage privé ;
les récepteurs d'appel radio sont prévus pour recevoir des messages cryptés au moyen du premier mécanisme de cryptage provenant de la centrale d'appel radio via une première connexion de données ;
dans lequel le système d'appel radio est configuré pour transmettre un des messages cryptés depuis la centrale d'appel radio via une deuxième connexion de données à un programme d'application d'un appareil électronique, en particulier d'un appareil de téléphonie mobile;
le premier appareil électronique est configuré pour établir une troisième connexion de données avec l'un des récepteurs d'appel radio et pour transmettre le message crypté reçu de la centrale d'appel radio au récepteur d'appel radio ; et
le récepteur d'appel radio est configuré pour décrypter le message crypté reçu de l'appareil électronique et pour envoyer le message décrypté à l'appareil électronique via la troisième connexion de données.

10. Système d'appel radio selon la revendication 9, **caractérisé en ce que**
le récepteur d'appel radio est configuré pour envoyer un jeton d'identification et la ou les adresses de réception à l'appareil électronique ; et
l'appareil électronique est configuré pour envoyer le jeton d'identification et la ou les adresses de réception à la centrale de radiomessagerie.

11. Récepteur d'appel radio configuré pour un système d'appel radio selon la revendication 9 ou 10, dans lequel
le récepteur d'appel radio est prévu pour stocker une ou plusieurs adresses de réception et pour stocker une ou plusieurs clés électroniques d'un premier mécanisme de cryptage du système d'appel radio, dans lequel la une ou les plusieurs clés électroniques du premier mécanisme de cryptage sont organisées par une organisation utilitaire comme système de cryptage privé ;
le récepteur d'appel radio est prévu pour recevoir des messages cryptés au moyen du premier mécanisme de cryptage provenant du centre d'appel radio via une première connexion de données ;
le récepteur d'appel radio est configuré pour établir une troisième connexion de données avec un appareil électronique, en particulier un smartphone, et pour recevoir de l'appareil électronique, via la troisième connexion de données, des messages cryptés envoyés par la centrale d'appel radio à l'appareil électronique ; et
le récepteur d'appel radio est configuré pour décrypter le message crypté reçu par l'appareil électronique et pour envoyer le message décrypté à l'appareil électronique via la troisième connexion de données.

12. Centrale d'appel radio, en particulier centrale d'appel radio pour un système d'appel radio selon la revendication 9 ou 10, la centrale d'appel radio étant configurée pour
crypter des messages à l'aide du premier mécanisme de cryptage et de les envoyer via une première connexion de données aux récepteurs d'appel radio, dans lequel la une ou les plusieurs clés électroniques du premier mécanisme de cryptage sont organisées par une organisation utilitaire comme système de cryptage privé ; et
de transmettre un des messages cryptés via une deuxième connexion de données à un programme d'application d'un appareil électronique, en particulier d'un appareil de téléphonie mobile.

13. Programme d'application pour un appareil électronique, en particulier pour un appareil de téléphonie mobile, dans lequel l'appareil électronique fait partie d'un système d'appel radio selon la revendication 9 ou 10 et est configuré pour recevoir de messages du système d'appel radio, dans lequel le programme d'application est configuré pour
recevoir des messages cryptés provenant de la centrale d'appel radio via une deuxième connexion de données à l'aide d'un premier mécanisme de cryptage, dans lequel la une ou les plusieurs clés électroniques du premier mécanisme de cryptage sont organisées par une organisation utilitaire comme système de cryptage privé ;
établir une troisième connexion de données avec un récepteur d'appel radio du système d'appel radio et de transmettre les messages cryptés reçus de la centrale d'appel radio au récepteur d'appel radio ; et
recevoir et afficher les messages décryptés provenant du récepteur d'appel radio via la troisième liaison de données.
